# EUROPEAN PATENT APPLICATION

(11) **EP 1 162 617 A2**
(43) Date of publication of application: **12.12.2001**
(21) Application number: 01110003.9
(22) Date of filing: 25.04.2001
(51) Int. Cl.: G11B 20/00

(54) **Information distributing apparatus and method, information recording medium, and information recording apparatus and method**

(30) Priority: 26.04.2000 JP 2000126418
(71) Applicant: Pioneer Corporation, Meguro-ku, Tokyo (JP)
(72) Inventor: Kuroda, Kazuo, Pioneer Corporation, Tokorozawa-shi, Saitama-ken (JP); Moriyama, Yoshiaki, Pioneer Corporation, Tokorozawa-shi, Saitama-ken (JP); Yoshida, Kazuyuki, Pioneer Corporation, Tokorozawa-shi, Saitama-ken (JP); Suzuki, Toshio, Pioneer Corporation, Tokorozawa-shi, Saitama-ken (JP)
(74) Representative: Reinhard - Skuhra - Weise & Partner

(57) **Abstract**

An information distributing apparatus (P) for distributing record information to be recorded in a DVD (40) is provided. The apparatus (P) includes an encryptor (2) for encrypting record information to be recorded in a recordable DVD-RW (40) by employing an encryption key (K) recorded in the DVD-RW (40) to generate encrypted record information and a modem (4) for distributing the generated encrypted record information to an information recording apparatus (S) through an external network (5). The information recording apparatus (S) records the encrypted record information in the DVD-RW (40) in which the encryption key (K) is recorded in advance.

## Description

### BACKGROUND OF THE INVENTION

The present invention relates to a technical field of an information distributing apparatus and method, an information recording medium, and an information recording apparatus and method, more specifically, to a technical field of the information distributing apparatus and method through which encrypted record information is distributed, an information recording medium used for recording of the distributed record information, and an information recording apparatus and method for recording the record information in the information recording medium.

In recent years, researches and developments related to a DVD that is an optical disk in which its record capacity is enhanced multiple times compared with that of a conventional CD (Compact Disk) are popular. Recently, a DVD for the exclusive use of reproduction in which contents such as music or a movie are recorded has been already generalized, and further, standardization regarding a recordable DVD has been promoted.

In general, the contents recorded in such DVD is protected under the copyright, and copying them without a copyright owner's permission is prohibited except for some exceptions as a general rule.

In order to provide such protection in terms of the copyright for the contents recorded in the DVD, various methods for preventing illegal copying are implemented in recent years.

When a DVD-RW (DVD-Re-Recordable) standard that is one of standards for recordable DVD and a DVD video standard that is one of standards for the DVD for the exclusive use of reproduction are compared, a more strict method is employed in an illegal copy prevention method in the DVD-RW standard due to its recordability. Thus, regarding illegal copy prevention methods an interchangeability between the DVD-RW standard and the DVD video standard for the exclusive use of reproduction has not been implemented.

Under a latest condition wherein the Internet is developed, it has been started that desired music or the like is acquired via the Internet and is copied in an optical disk or the like at hand.

However, since no interchangeability is taken regarding illegal copy prevention methods between the DVD-RW standard and the DVD video standard as described above, there is a problem that it is not possible to decrypt the contents, which is encrypted based on the DVD-RW standard and recorded in DVD-RW, to reproduce them in an information reproduction apparatus for the DVD video which has been recently generalized. Therefore, it is lacking in general versatility.

In the distribution of the contents, such as music, via the Internet described above, since the Internet is made on the premise of a network configured via a plurality of computers, when distribution is performed without giving any process of copy prevention, a person other than the one who is primarily to receive the distribution of the contents can easily acquire the contents on the halfway of the distribution. As a result, there is a problem that the copyright of the distributor is not protected.

### SUMMARY OF THE INVENTION

The present invention has been developed considering each problem described above, and it is an object of the present invention to provide an information distributing apparatus and method by which record information to be recorded in a DVD such as music can be distributed while protection in terms of copyright is ensured and general versatility in reproduction processing can be improved. In addition, it is another object of the present invention to provide an information recording medium used for recording of the distributed record information, and an information recording apparatus and method for recording the record information in the information recording medium.

The above object of the present invention can be achieved by an information distributing apparatus of the present invention. The apparatus is provided with: an encrypting device for encrypting record information to be recorded in a recordable information recording medium by employing encryption information recorded in the information recording medium to generate encrypted record information; and a distributing device for distributing the generated encrypted record information to an information recording apparatus through a telecommunications line, the information recording apparatus recording the encrypted record information in the recordable information recording medium in which the encryption information is recorded in advance.

According to the present invention, since encrypted record information, which is encrypted by employing encryption information recorded in the information recording medium, is distributed to an information recording apparatus recording the encrypted record information in the information recording medium, even if the encrypted record information is acquired on the halfway of the distribution, it is impossible to display the record information in a state where the encryption information is not acquired. Thus, it can be prevented from happening that the encrypted record information illegally acquired on the halfway of the distribution is illegally displayed or the like.

Further, by recording the encrypted record information in the information recording medium, in which the encryption information is recorded, at a distribution destination of the encrypted record information, it becomes possible to decrypt the encrypted record information and reproduce the record information in all existing information reproduction apparatuses which decrypts encrypted information and reproduces it by employing the encryption information which is recorded in the information recording medium in advance.

Thus, both safe distribution of the encrypted record information in terms of copyright and improvement of general versatility in reproduction processing can be realized.

In one aspect of the present invention, the information recording medium is a DVD capable of recording the encrypted record information.

According to this aspect, a high amount of the encrypted record information can be distributed and recorded.

In another aspect of the present invention, the telecommunications line is any one of an Internet line, a cable television line, a satellite broadcasting line, and a ground wave digital line.

According to this aspect, even when the encrypted record information is distributed employing the Internet line, a cable television line, a satellite broadcasting line, a ground wave digital line in which acquirement of information on the halfway of distribution is easy, or the like, it can be prevented from happening that the encrypted record information on the halfway of the distribution is illegally acquired and displayed or the like.

The above object of the present invention can be achieved by an information recording medium of the present invention. The information recording medium is served as a recordable information recording medium for an information recording apparatus recording encrypted record information in the recordable information recording medium. The record information which is to be recorded in the information recording medium, is encrypted by employing encryption information in an information distributing apparatus, and distributed from the information distributing apparatus through a telecommunications line. Then, the information recording medium has an encryption information recording area in which the same encryption information as that employed for encryption of the record information in the information distributing apparatus, is recorded in advance.

According to the present invention, when the encrypted record information after distribution is recorded in the information recording medium, it becomes possible to decrypt the encrypted record information by employing the encryption information which is recorded in the information recording medium. However, even if the encrypted record information is acquired on the halfway of the distribution, it is impossible to display the record information in a state where the encryption information is not acquired. Thus, it can be prevented from happening that the encrypted record information illegally acquired on the halfway of the distribution is illegally displayed or the like.

Further, when the encrypted record information is recorded in the information recording medium, it becomes possible to decrypt the encrypted information and reproduce the record information in all existing information reproduction apparatuses which decrypts encrypted information and reproduces it by employing the encryption information which is recorded in the information recording medium in advance.

Thus, both safe distribution of the encrypted record information in terms of copyright and improvement of general versatility in reproduction processing can be realized.

In one aspect of the present invention, the information recording medium is a DVD capable of recording the encrypted record information.

According to this aspect, a high amount of the encrypted record information can be distributed and recorded.

In another aspect of the present invention, the telecommunications line is any one of an Internet line, a cable television line, a satellite broadcasting line, and a ground wave digital line.

According to this aspect, even when the encrypted record information is distributed employing the Internet line, a cable television line, a satellite broadcasting line, a ground wave digital line in which acquirement of information on the halfway of distribution is easy, or the like, it can be prevented from happening that the encrypted record information on the halfway of the distribution is illegally acquired and displayed or the like.

The above object of the present invention can be achieved by an information recording apparatus of the present invention. The information recording apparatus records encrypted record information in a recordable information recording medium. The record information which the information recording apparatus records in the recordable information recording medium, is encrypted by employing encryption information in an information distributing apparatus, and distributed from the information distributing apparatus to the information recording apparatus through a telecommunications line. In the information recording medium used for recording in the information recording apparatus, the same encryption information as that employed for encryption of the record information in the information distributing apparatus is recorded in advance. Then, the information recording apparatus includes an acquiring device for acquiring the encrypted record information through the telecommunications line, and a recording device for recording the acquired encrypted record information in the information recording medium.

According to the present invention, since the information recording apparatus acquires the encrypted record information distributed from the information distributing apparatus through a telecommunications line and records it in the information recording medium in which the encryption information is recorded in advance, even if the encrypted record information is acquired on the halfway of the distribution, it is impossible to display the record information in a state where the encryption information is not acquired. Thus, it can be prevented from happening that the encrypted record information illegally acquired on the halfway of the distribution is illegally displayed or the like.

Further, the information recording apparatus records the encrypted record information in the information recording medium, in which the encryption information is recorded in advance, it becomes possible to decrypt the encrypted record information and reproduce the record information in all existing information reproduction apparatuses which decrypts encrypted information and reproduces it by employing the encryption information which is recorded in the information recording medium in advance.

Thus, both safe distribution of the encrypted record information in terms of copyright and improvement of general versatility in reproduction processing can be realized.

In one aspect of the present invention, the information recording medium is a DVD capable of recording the encrypted record information.

According to this aspect, a high amount of the encrypted record information can be distributed and recorded.

In another aspect of the present invention, the telecommunications line is any one of an Internet line, a cable television line, a satellite broadcasting line, and a ground wave digital line.

According to this aspect, even when the encrypted record information is distributed employing the Internet line, a cable television line, a satellite broadcasting line, a ground wave digital line in which acquirement of information on the halfway of distribution is easy, or the like, it can be prevented from happening that the encrypted record information on the halfway of the distribution is illegally acquired and displayed or the like.

The above object of the present invention can be achieved by an information distributing method of the present invention. The information distributing method includes: an encrypting process of encrypting record information to be recorded in a recordable information recording medium by employing encryption information recorded in the information recording medium to generate encrypted record information; and a distributing process of distributing the generated encrypted record information to an information recording apparatus through a telecommunications line, the information recording apparatus recording the encrypted record information in the recordable information recording medium in which the encryption information is recorded in advance.

According to the present invention, since encrypted record information, which is encrypted by employing encryption information recorded in the information recording medium, is distributed to an information recording apparatus recording the encrypted record information in the information recording medium, even if the encrypted record information is acquired on the halfway of the distribution, it is impossible to display the record information in a state where the encryption information is not acquired. Thus, it can be prevented from happening that the encrypted record information illegally acquired on the halfway of the distribution is illegally displayed or the like.

Further, by recording the encrypted record information in the information recording medium, in which the encryption information is recorded, at a distribution destination of the encrypted record information, it becomes possible to decrypt the encrypted record information and reproduce the record information in all existing information reproduction apparatuses which decrypts encrypted information and reproduces it by employing the encryption information which is recorded in the information recording medium in advance.

Thus, both safe distribution of the encrypted record information in terms of copyright and improvement of general versatility in reproduction processing can be realized.

In one aspect of the present invention, the information recording medium is a DVD capable of recording the encrypted record information.

According to this aspect, a high amount of the encrypted record information can be distributed and recorded.

In another aspect of the present invention, the telecommunications line is any one of an Internet line, a cable television line, a satellite broadcasting line, and a ground wave digital line.

According to this aspect, even when the encrypted record information is distributed employing the Internet line, a cable television line, a satellite broadcasting line, a ground wave digital line in which acquirement of information on the halfway of distribution is easy, or the like, it can be prevented from happening that the encrypted record information on the halfway of the distribution is illegally acquired and displayed or the like.

The above object of the present invention can be achieved by an information recording method of the present invention.

The information recording apparatus records encrypted record information in a recordable information recording medium. In the information recording method, encrypted record information is recorded in a recordable information recording medium. The record information which is recorded in the recordable information recording medium, is encrypted by employing encryption information in an information distributing apparatus, and distributed from the information distributing apparatus through a telecommunications line. In the information recording medium used for recording in the information recording method, the same encryption information as that employed for encryption of the record information in the information distributing apparatus is recorded in advance. Then, the information recording method includes an acquiring process of acquiring the encrypted record information through the telecommunications line; and a recording process for recording the acquired encrypted record information in the information recording medium.

According to the present invention, since the encrypted record information distributed from the information distributing apparatus is acquired through a telecommunications line and recorded in the information recording medium in which the encryption information is recorded in advance, even if the encrypted record information is acquired on the halfway of the distribution, it is impossible to display the record information in a state where the encryption information is not acquired. Thus, it can be prevented from happening that the encrypted record information illegally acquired on the halfway of the distribution is illegally displayed or the like.

Further, the encrypted record information is recorded in the information recording medium, in which the encryption information is recorded in advance, it becomes possible to decrypt the encrypted record information and reproduce the record information in all existing information reproduction apparatuses which decrypts encrypted information and reproduces it by employing the encryption information which is recorded in the information recording medium in advance.

Thus, both safe distribution of the encrypted record information in terms of copyright and improvement of general versatility in reproduction processing can be realized.

In one aspect of the present invention, the information recording medium is a DVD capable of recording the encrypted record information.

According to this aspect, a high amount of the encrypted record information can be distributed and recorded.

In another aspect of the present invention, the telecommunications line is any one of an Internet line, a cable television line, a satellite broadcasting line, and a ground wave digital line.

According to this aspect, even when the encrypted record information is distributed employing the Internet line, a cable television line, a satellite broadcasting line, a ground wave digital line in which acquirement of information on the halfway of distribution is easy, or the like, it can be prevented from happening that the encrypted record information on the halfway of the distribution is illegally acquired and displayed or the like.

### BRIEF DESCRIPTION OF THE DRAWINGS

FIG. 1 is a block diagram showing a schematic configuration of an information distributing apparatus of a preferred embodiment of the present invention;
FIG. 2 is a block diagram showing a schematic configuration of an information recording/reproducing apparatus of the preferred embodiment of the present invention; and
FIG. 3 is a block diagram showing a configuration of a binarization section.

### DETAILED DESCRIPTION OF THE PREFERRED EMBODIMENTS

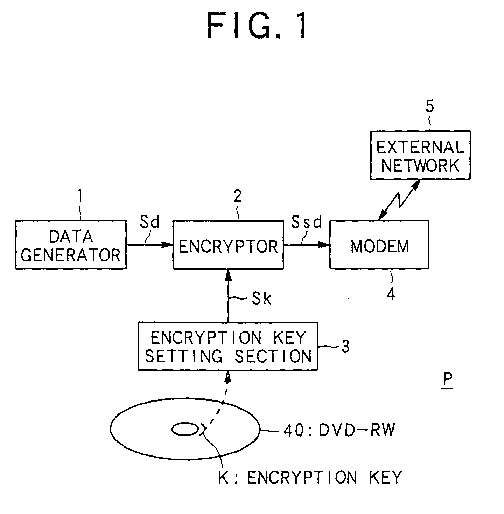

Next, preferred embodiments of the present invention are explained employing FIG 1 to FIG. 3.

The embodiments explained below are embodiments of a case where the present invention is applied to an illegal copy prevention system preventing an illegal copy when record information such as music to be recorded in an DVD-RW as an information recording medium is acquired and recorded via an external network such as the Internet.

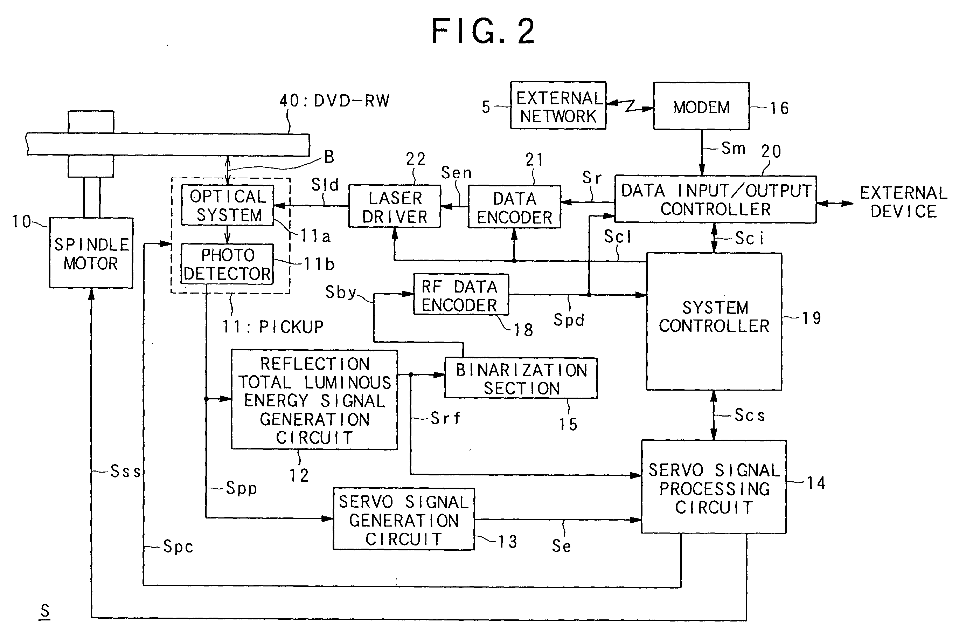

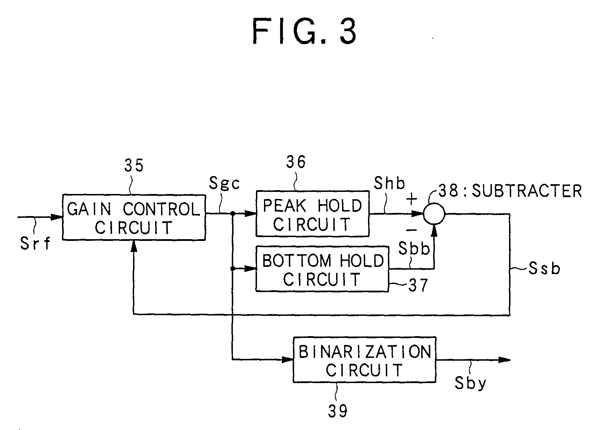

FIG. 1 is a block diagram showing a schematic configuration of an information distributing apparatus configuring an illegal copy prevention system according to the embodiment, and FIG. 2 and FIG. 3 are block diagrams showing schematic configurations of an information recording/reproducing apparatus configuring the illegal copy prevention system according to the embodiment.

First, the configuration and operations of the information distributing apparatus configuring the illegal copy prevention system according to the embodiment are explained employing FIG. 1.

The information distributing apparatus P is installed in the Internet provider or the like specifically and is composed of a data generator 1, an encryptor 2 as an encrypting device, an encryption key set section 3, and a modem 4 as a distributing device as shown in FIG. 1.

The modem 4 is configured so that transmission/reception of information is possible with an external network 5 such as the Internet via the telephone line or the like.

Next, operations are explained.

First, the data generator 1 generates record information that is information such as music to be recorded in a DVD-RW 40 and outputs it to the encryptor 2 as a data signal Sd.

The encryption key set section 3 generates an encryption key K that is the same encryption key K as that recorded in the DVD-RW 40 and that is for encrypting the record information recorded in the DVD-RW 40. The encryption key set section 3 also outputs this generated encryption key K to the encryptor 2 as a key signal Sk.

The DVD-RW 40 is a DVD capable of information recording (information rewriting) plural times, the encryption key K is recorded at the time of the manufacturing thereof, and transfer such as selling is implemented in a state where the encryption key K is recorded.

Although the encryption key K is common to all of the DVD-RWs 40 according to the present embodiment, for example, the key K can be different for each manufacturer or for each seller under a specific regularity.

Further, as a recording method of the encryption key K itself into the DVD-RW 40, a recording method through which detection of the encryption key K cannot be easily performed in a reproduction device other than an information recording/reproducing apparatus according to the embodiment described later can be employed. For example, so called CSS (Content Scramble System) is employed.

Then, the encryptor 2 performs predetermined encryption processing such as scramble processing for the data signal Sd, employing the key signal Sk outputted from the encryption key set section 3. The encryptor 2 also generates an encrypted data signal Ssd that is a signal in which data signal Sd is encrypted to output it to the modem 4.

The modem 4 performs predetermined modulation processing for the encrypted data signal Ssd and outputs it to the external network 5 via the telephone line or the like.

Thus, the information recording/reproducing apparatus described later can acquire the encrypted data signal Ssd from the external network 5.

Next, configuration and operations of the information recording/reproducing apparatus configuring the illegal copy prevention system according to the embodiment are explained employing FIG. 2 and FIG. 3.

As shown in FIG. 2, the information recording/reproducing apparatus S is comprised of a spindle motor 10, a pickup 11, a reflection total luminous energy signal generation circuit 12, a servo signal generation circuit 13, a servo signal processing circuit 14, a binarization section 15, a modem 16 as an acquiring device, an RF data decoder 18, a system controller 19 as a recording device, a data input/output controller 20, a data encoder 21, and a laser driver 22.

The pickup 11 is composed of an optical system 11a including a semiconductor laser, a deflecting beam splitter, and an objective lens and the like and a photo detector 11b receiving reflected light from the packed DVD-RW 40.

The binarization section 15 is comprised of a gain control circuit 35, a peak hold circuit 36, a bottom hold circuit 37, a subtracter 38, and a binarization circuit 39 as shown in FIG. 3.

Next, operations are explained.

First, operations of a case where record information is recorded for the alienated DVD-RW 40 in a state where the encryption key K described above is recorded in advance are explained.

There are a case where the DVD-RW 40 records information, which is inputted from an external device (not shown) as an input/output signal Sio, as the record information and a case where the DVD-RW 40 inputs information acquired from the external network 5 via the modem 16, which is information outputted to the external network 5 from the information distributing apparatus P shown in FIG. 1, as a modem signal Sm and records it as the record information.

With respect to the record information inputted as the modem signal Sm, processing of encryption is performed in the information distributing apparatus P as described above. With respect to the record information inputted from the external device as the input/output signal Sio, there are a case where encryption is performed and a case where encryption is not performed.

At a time of recording the record information, first, the spindle motor 10 rotates the DVD-RW 40 at a predetermined rotational speed based on a spindle control signal Sss from the servo signal processing circuit 14.

The data input/output controller 20, while transmitting/receiving a control signal Sci to/from the system controller 19, performs predetermined interface processing for either one of the record information inputted as the input/output signal Sio or the record information inputted as the modem signal Sm and generates record data Sr containing a content of either one of them to output it to the data encoder 21.

Then, the data encoder 21 performs encoding processing which encodes the record data Sr through a necessary coding mode and right strategy processing for the record data Sr based on a record clock signal Scl from the system controller 19 and generates encoded data Sen to output it to the laser driver 22.

At this time, in a case where the record data Sr contain encrypted record information which is either the record information inputted as the modem signal Sm or the record information inputted as the input/output signal Sio, since the record information itself has been already encrypted, only the encoding processing and the strategy processing are performed so that the encoded data Sen are generated. However, in a case where the record data Sr are the record information inputted as the input/output signal Sio and contain the record information which is not encrypted, predetermined encryption processing such as scramble processing or the like is performed in addition to the encoding processing and the strategy processing so that the encoded data Sen are generated.

The laser driver 22 generates a drive signal Sld for driving a semiconductor laser (not shown), which is provided in the optical system 11b in the pickup 11, corresponding to the encoded data Sen based on the record clock signal Scl from the system controller 19 to output it to the semiconductor laser.

Optical beam B for recording which has intensity change corresponding to the record information to be recorded by means of the semiconductor laser is irradiated onto an information track in a record area of the DVD-RW 40, and thus, for example, a phase change pit corresponding to the record information is formed on the information track so that the record information is recorded.

At this time, reflected light of the optical beam B from the DVD-RW 40 is received by the photo detector 11b, and the photo detector 11b generates a detection signal Spp corresponding to the reflected light and outputs it to the servo signal generation circuit 13.

The servo signal generation circuit 13 extracts an error signal Se from the detection signal Spp. The error signal Se represents a dislocation (including a dislocation in a vertical direction and a dislocation in a horizontal direction with respect to the information track) of a focal position in the optical beam B from a position of the information track on the DVD-RW 40 and outputs it to the servo signal processing circuit 14.

The servo signal processing circuit 14 transmits/receives a control signal Scs to/from the system controller 19 and generates the spindle control signal Sss for rotationally controlling the spindle motor 10 based on the error signal Se to output it to the spindle motor 10. The servo signal processing circuit 14 generates a pickup servo control signal Spc for driving an actuator (not shown) in the pickup 11 and outputs it to the actuator. The actuator moves the objective lens (not shown) in a vertical direction or a horizontal direction with respect to the information track based on the pickup servo control signal Spc so as to correct a position in the vertical direction and the horizontal direction of the focal position in the optical beam B and cancel the dislocation.

With the operations above, while the focus servo control and tracking servo control are performed, the record information is recorded in the DVD-RW 40.

Next, operations of a time when the recorded information recorded in the DVD-RW 40 is reproduced are explained.

During reproduction of record information, the spindle motor 10 rotates the DVD-RW 40 at a predetermined rotational speed based on the spindle control signal Sss, similar to a case during record of record information.

At this time, the optical system 11b irradiates a certain intensity of optical beam B for the record information reproduction for the rotating DVD-RW 40. The reflected light of the optical beam B from the DVD-RW 40 is received by the optical detector 11b, and the optical detector 11b generates the detection signal Spp corresponding to the record information on the DVD-RW 40 and outputs it to the reflection total luminous energy signal generation circuit 12 and the servo signal generation circuit 13.

Then, the servo signal generation circuit 13 extracts the error signal Se, similar to the information record time, and outputs it to the servo signal processing circuit 14.

The reflection total luminous energy signal generation circuit 12 generates an RF signal Srf corresponding to the record information recorded in the DVD-RW 40 based on the detection signal Spp and outputs it to the binarization section 15 and the servo signal processing circuit 14. In a case where the optical detector 11b is comprised of tetrameric optical detection elements, the RF signal Srf is an RF signal obtained by synthesizing output signals from the respective four optical detection elements.

The servo signal processing circuit 14, while transmitting/receiving the control signal Scs to/from the system controller 19, generates the spindle control signal Sss, similar to the case during recording the record information, based on the RF signal Srf and the error signal Se and outputs it to the spindle motor 10. The servo signal processing circuit 14 generates the pickup servo control signal Spc and outputs it to the actuator.

Parallel to this, the binarization section 15 binarizes the RF signal Srf generated corresponding to the reflected light of the optical beam B scanning the record area on the DVD-RW 40 and generates a binarized signal Sby to output it to the RF data decoder 18.

As shown in FIG. 3, the RF signal Srf inputted to the binarization section 15 is outputted to the gain control circuit 35.

The gain control circuit 35 controls the amplitude of the RF signal Srf so that the amplitude indicates a constant value based on a subtraction signal Ssb described later and generates a gain control signal Sgc to output it to the peak hold circuit 36, the bottom hold circuit 37, and the binarization circuit 39.

The peak hold circuit 36 detects a peak value (local maximum) of the gain control signal Sgc and generates a peak hold signal Shb representing the peak value to output it to one side input terminal of the subtracter 38.

Parallel to this, the bottom hold circuit 37 detects a bottom value (local minimum) of the gain control signal Sgc and generates a bottom hold signal Sbb representing the bottom value to output it to the other side input terminal of the subtracter 38.

The subtracter 38 subtracts the bottom hold signal Sbb from the peak hold signal Shb and generates the subtraction signal Ssb representing an amplitude fluctuation of the RF signal Srf to feed back it to the gain control circuit 35.

Parallel to this, the binarization circuit 39 binarizes the gain control signal Sgc whose amplitude indicates the constant value through a well known binarization method and generates the binarized signal Sby to output it to the RF data decoder 18.

The RF data decoder 18 performs decode processing (decryption processing) corresponding to encryption processing performed for the record information for the binarized signal Sby corresponding to the reflected light of the optical beam B scanning the record area and generates a decode signal Spd corresponding to the record information to output it to the external device (not shown) as the input/output signal Sio via the data input/output controller 20.

In a case where the record information recorded in the DVD-RW 40 is the one encrypted and distributed by the information distributing apparatus P, the decode processing in the RF data decoder 18 is performed employing the encryption key K which is detected by the photo detector 11b based on the reflected light of the optical beam B from the DVD-RW 40 and which is included in the detection signal Spp.

Parallel to the operations of the respective constitutional members described above, the system controller 19, while generating the control signal Sci and the record clock signal Scl, controls the operations of the respective constitutional members. The system controller 19 continuously performs servo control operations such as the focus servo control and the tracking servo control by outputting the control signal Scs to the servo signal processing circuit 14.

As explained above, with the operations of the illegal copy prevention system of the embodiment, since the record information encrypted by employing the encryption key K recorded in the DVD-RW 40 is distributed to the information recording/reproducing apparatus S recording the record information in the DVD-RW 40, even if the encrypted record information is acquired on the halfway of the distribution, it is impossible to display the record information in a state where the encryption key K is not acquired. Thus, it can be prevented from happening that the record information illegally acquired on the halfway of the distribution is illegally displayed or the like.

By recording the encrypted record information in the DVD-RW 40 in which the encryption key K is recorded in a distribution destination of the record information, it becomes possible to decrypt and reproduce the encrypted record information in all existing information reproduction apparatuses in which information encryption is decrypted and outputted employing the encryption key K which is recorded in advance.

Since such existing information reproducing apparatuses correspond to an information reproducing apparatus performing reproduction through the DVD for the exclusive use of reproduction in conformity with the DVD video standards, the record information recorded in the DVD-RW 40 can be reproduced even in an information reproducing apparatus in conformity with the DVD video standards.

Further, since the DVD-RW 40 is employed as an information recording medium, it is possible to distribute and record a high amount of encrypted record information.

Moreover, since such distribution is implemented via the external network 5 such as the Internet, even when record information is distributed employing the external network 5 through which the acquirement of information on the halfway of the distribution is easy, it can be prevented from happening that the record information on the halfway of the distribution is illegally acquired and displayed or the like.

In the embodiment described above, although the case where the DVD-RW 40 is employed as an information recording medium is explained, other than this, the present invention can be applied to an information recording/reproducing system in which an information recording medium for the exclusive use of reproduction and an information recording medium capable of recording and reproducing are processed by the same illegal copy prevention method. For example, a DVD-R described above, or a CD-R (CD-Recordable) which is a recordable CD, or a CD-RW (CD-ReWritable) may be employed as an information recording medium in which the encryption key K is recorded in advance.

The present invention can be applied to not only a case where encrypted record information is distributed via the external network 5 but also a case where encrypted record information is distributed via the so called cable television (CATV) line, a satellite broadcasting line, a ground wave digital line, or the like and is recorded in the DVD-RW 40 or the like.

The invention may be embodied in other specific forms without departing from the spirit or essential characteristics thereof. The present embodiments are therefore to be considered in all respects as illustrative and not restrictive, the scope of the invention being indicated by the appended claims rather than by the forgoing description and all changes which come within the meaning and range of equivalency of the claims are therefore intended to be embraces therein.

## Claims

1. An information distributing apparatus (P) **characterized in that** the information distributing apparatus (P) comprises:
an encrypting device (2) for encrypting record information to be recorded in a recordable information recording medium (40) by employing encryption information (K) recorded in the information recording medium (K) to generate encrypted record information; and
a distributing device (4) for distributing the generated encrypted record information to an information recording apparatus (S) through a telecommunications line, the information recording apparatus (S) recording the encrypted record information in the recordable information recording medium (40) in which the encryption information (K) is recorded in advance.

2. The information distributing apparatus (P) according to claim 1, **characterized in that** the recordable information recording medium (40) is a DVD capable of recording the encrypted record information.

3. The information distributing apparatus (P) according to claim 1 or 2, **characterized in that** the telecommunications line is any one of an Internet line, a cable television line, a satellite broadcasting line, and a ground wave digital line.

4. An information recording medium (40) served as a recordable information recording medium (40) for an information recording apparatus (S) recording encrypted record information in the recordable information recording medium (40), the encrypted record information distributed from an information distributing apparatus (P) through a telecommunications line, the information distributing apparatus (P) encrypting the record information by employing encryption information (K), **characterized in that** the information recording medium (40) comprises an encryption information recording area in which the same encryption information (K) as that employed for encryption of the record information in the information distributing apparatus (P), is recorded in advance.

5. The information recording medium (40) according to claim 4, **characterized in that** the information recording medium (40) is a DVD capable of recording the encrypted record information.

6. The information recording medium (40) according to claim 4 or 5, **characterized in that** the telecommunications line is any one of an Internet line, a cable television line, a satellite broadcasting line, and a ground wave digital line.

7. An information recording apparatus (S) for recording encrypted record information in a recordable information recording medium (40), the encrypted record information distributed from an information distributing apparatus (P) through a telecommunications line, the information distributing apparatus (P) encrypting the record information by employing encryption information (K), the information recording medium (40) in which the same encryption information (K) as that employed for encryption of the record information in the information distributing apparatus (P) is recorded in advance, **characterized in that** the information recording apparatus (S) comprises:
an acquiring device (16) for acquiring the encrypted record information through the telecommunications line; and
a recording device (19) for recording the acquired encrypted record information in the information recording medium (40).

8. The information recording apparatus (S) according to claim 7, **characterized in that** the information recording medium (40) is a DVD capable of recording the encrypted record information.

9. The information recording apparatus (S) according to claim 7 or 8, **characterized in that** the telecommunications line is any one of an Internet line, a cable television line, a satellite broadcasting line, and a ground wave digital line.

10. An information distributing method **characterized in that** the information distributing method comprises:
an encrypting process of encrypting record information to be recorded in a recordable information recording medium (40) by employing encryption information (K) recorded in the information recording medium (40) to generate encrypted record information; and
a distributing process of distributing the generated encrypted record information to an information recording apparatus (S) through a telecommunications line, the information recording apparatus (S) recording the encrypted record information in the recordable information recording medium (40) in which the encryption information (K) is recorded in advance.

11. The information distributing method according to claim 10, **characterized in that** the information recording medium (40) is a DVD capable of recording the encrypted record information.

12. The information distributing method according to claim 10 or 11, **characterized in that** the telecommunications line is any one of an Internet line, a cable television line, a satellite broadcasting line, and a ground wave digital line.

13. The information recording method for recording encrypted record information in a recordable information recording medium (40), the encrypted record information distributed from an information distributing apparatus (P) through telecommunications line, the information distributing apparatus (P) encrypting the record information by employing encryption information (K), the information recording medium (40) in which the same encryption information (K) as that employed for encryption of the record information in the information distributing apparatus (P) is recorded in advance, **characterized in that** the information recording method comprises:
an acquiring process of acquiring the encrypted record information through the telecommunications line; and
a recording process for recording the acquired encrypted record information in the information recording medium (40).

14. The information recording method according to claim 13, **characterized in that** the information recording medium (40) is a DVD capable of recording the encrypted record information.

15. The information recording method according to claim 13 or 14, **characterized in that** the telecommunications line is any one of an Internet line, a cable television line, a satellite broadcasting line, and a ground wave digital line.
